(19) Europäisches Patentamt
European Patent Office
Office européen des brevets

(11) **EP 3 716 137 A1**

(12) **EUROPEAN PATENT APPLICATION**

(43) Date of publication:
**30.09.2020 Bulletin 2020/40**

(51) Int Cl.:
**G06K 9/00** *(2006.01)*   **G06K 9/46** *(2006.01)*
**G06K 9/32** *(2006.01)*

(21) Application number: **19165623.0**

(22) Date of filing: **27.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Visteon Global Technologies, Inc.
Van Buren Township, MI 48111-5711 (US)**

(72) Inventors:
• **ISMAIL, Asad**
  **76131 Karlsruhe (DE)**
• **VERONESE, Lucas**
  **76227 Karlsruhe (DE)**
• **PATHAK, Shashank**
  **76227 Karlsruhe (DE)**

(74) Representative: **Dummett Copp LLP
25 The Square
Martlesham Heath
Ipswich IP5 3SL (GB)**

(54) **SYSTEMS AND METHODS FOR ESTIMATING THE POSITION OF A TARGET VEHICLE**

(57)    Systems and methods for estimating the position of a target vehicle (14) in a vehicle environment using a machine learning model, such as an artificial neural network, are described. A bounding area (120) is generated around the target vehicle (14) by identifying the position of one or more pre-defined features of the target vehicle (14), such as a vehicle registration plate, in an image of the vehicle environment. The machine learning model is trained with said one or more pre-defined features. The identified position of the one or more pre-defined features is used to determine the position of a lower edge portion and/or first and second side edge portions of the bounding area (120).

Fig. 5

Printed by Jouve, 75001 PARIS (FR)

**Description**

TECHNICAL FIELD

Embodiments herein generally relate to systems and methods for estimating the position of a target vehicle in a vehicle environment and in particular relate to the optimization and use of a machine learning-based computer vision system for use in advanced driver assistance systems.

BACKGROUND

Advanced driver assistance systems (ADAS) in vehicles rely on sensing aspects of the environment surrounding the vehicle to determine the position of nearby objects, in particular other vehicles. Typically, inputs from a variety of sensors are combined to perceive the surrounding environment, including computer vision, radar, Lidar, sonar and so on. Of these, computer vision is particularly useful, since it readily allows the identification or classification of neighbouring objects.

Conventionally, computer vision systems for use in ADAS acquire images of a vehicle environment and perform an object detection routine to identify vehicle objects in the image. The output of the object detection routine is typically in the form of a bounding box that attempts to define the edges of the identified target vehicle and therefore provide an estimate of the position of the target vehicle within the two-dimensional image.

Various methods may then be used to estimate the position of the target vehicle in three-dimensional space. For example, the distance of a target vehicle ahead of the ADAS-equipped vehicle ("ego vehicle") may be estimated using the bounding box data for use in adaptive cruise control (ACC) or other ADAS functions.

One key requirement of computer vision systems for ADAS-equipped vehicles is to output results in, or close to, real time. Such systems are conventionally configured as deep neural networks. The performance of such networks, in terms of the ability to correctly discriminate between vehicles and other objects and to accurately determine the position of a target vehicle whilst achieving a suitable processing speed, is dependent on the computational resources available.

Very deep networks, which are capable of high accuracy and discrimination, would typically require computational resources that exceed those typically available in vehicle applications. Accordingly, conventional ADAS systems often rely on smaller networks with lower discriminative power. This can give rise to a lower quality of detection (including false positives and false negatives in vehicle identification) and less accurate position detection than would be desirable, such as in regards to conventional bounding boxes.

SUMMARY

A first aspect of the present disclosure relates to a method for estimating the position of a target vehicle in a vehicle environment using a machine learning model. The method comprises providing to the machine learning model an image of the vehicle environment, identifying, in the image, a target vehicle, and generating a bounding area around the target vehicle. The bounding area comprises a lower edge portion associated with a lowermost edge of the target vehicle and first and second side edge portions associated with first and second side edges of the target vehicle, and thereby provides an estimate of the position of the target vehicle in the image. Generating the bounding area comprises identifying the position of one or more pre-defined features of the target vehicle in the image, the machine learning model having been trained with said one or more pre-defined features, and using the identified position of the one or more pre-defined features to determine the position of the lower edge portion and/or the first and second side edge portions of the bounding area.

Embodiments of the method may offer improved computational efficiency, lower resource demand and/or higher accuracy than conventional methods by incorporating the use of pre-defined features that provide domain knowledge and context awareness in the vehicle environment.

Determining the position of the lower edge portion and/or the first and second side edge portions of the bounding area may comprise using the identified position of one or more first pre-defined features to determine the position of one or more further pre-defined features of the target vehicle in the image. In this case, the machine learning model may also have been trained with the one or more further pre-defined features. Determining the position of the lower edge portion and/or the first and second side edge portions of the bounding area may further comprise using the identified position of the or each further pre-defined feature to determine the position of the lower edge portion and/or the first and second side edge portions of the bounding area.

The one or more pre-defined features may comprise a vehicle registration plate of the target vehicle. Alternatively, or in addition, the one or more pre-defined features comprises a light cluster of the target vehicle and/or a tyre of the target vehicle.

The identified position of the or each pre-defined features may be used to determine the position only of the lower edge portion of the bounding area. Such an arrangement may be useful for ADAS applications that are particularly sensitive to the accuracy of the lower edge portion of the bounding area.

The image of the vehicle environment may be obtained from a forward-facing or rear-facing camera of an ego vehicle. In such cases, the method may include determining a spacing between the ego vehicle and the target vehicle based on the position of the lower edge portion of the generated bounding area. The method may further comprise obtaining a distance measurement between the ego vehicle and the target vehicle from a vehicle sensor, and comparing the distance measurement with the determined spacing to validate the position of the target vehicle with respect to the ego vehicle.

In embodiments, the method comprises outputting the bounding area to an advanced driving assistance system (ADAS) client.

The machine learning model may comprise an artificial neural network.

The machine learning model may be trained using a loss function in which a lower edge weighting factor $\lambda_B$ is assigned to the lower edge portion of the bounding area and left and right edge weighting factors $\lambda_L$, $\lambda_R$ are assigned to the left and right edge portions of the bounding area. Preferably, the lower edge weighting factor $\lambda_B$ is greater than the left and right edge weighting factors $\lambda_L$, $\lambda_R$. In this way, in operation, the available computational resources are preferentially directed towards accurate calculation of the lower edge portion of the bounding area. In one example, the lower edge weighting factor $\lambda_B$ is set to unity and the left and right edge weighting factors $\lambda_L$, $\lambda_R$ are set to zero. In another example, the lower edge weighting factor $\lambda_B$ is set to unity and the left and right edge weighting factors $\lambda_L$, $\lambda_R$ are set to 0.5.

A second aspect of the disclosure relates to a system for estimating the position of a target vehicle in a vehicle environment, comprising a machine learning model trained with one or more pre-defined features of the target vehicle. The machine learning model is configured to receive, from an imaging device, an image of the vehicle environment, identify, in the image, a target vehicle, and generate a bounding area around the target vehicle. The bounding area comprises a lower edge portion associated with a lowermost edge of the target vehicle and first and second side edge portions associated with first and second side edges of the target vehicle, and thereby provides an estimate of the position of the target vehicle in the image. The machine learning model is configured to generate the bounding area by identifying the position of one or more of the pre-defined features of the target vehicle in the image and using the identified position of the one or more pre-defined features to determine the position of the lower edge portion and/or the first and second side edge portions of the bounding area.

Another aspect of the disclosure relates to an advanced driver assistance system (ADAS) for a vehicle, comprising a system for estimating the position of a target vehicle in a vehicle environment as described above and an ADAS client. The machine learning model may be configured to output to the ADAS client the bounding area identifying the position of the target vehicle in the image. A further aspect of the disclosure relates to a vehicle equipped with an advanced driver assistance system (ADAS) of this type.

A further aspect of the disclosure relates to a method of training a machine learning model for use in estimating the position of a target vehicle in a vehicle environment. The machine learning model is configured to output a bounding area comprising a lower edge portion associated with a lowermost edge of the target vehicle and first and second side edge portions associated with first and second side edges of the target vehicle, and thereby provides an estimate of the position of the target vehicle in the image. The method includes training the machine learning model using a loss function in which a lower edge weighting factor $\lambda_B$ is assigned to the lower edge portion of the bounding area and left and right edge weighting factors $\lambda_L$, $\lambda_R$ are assigned to the left and right edge portions of the bounding area. Preferably, the lower edge weighting factor $\lambda_B$ is greater than the left and right edge weighting factors $\lambda_L$, $\lambda_R$.

Preferred and/or optional features of each aspect and embodiment of the disclosure may also be used, alone or in appropriate combination, in the other aspects and embodiments also.

BRIEF DESCRIPTION OF THE DRAWINGS

Embodiments will now be further described, by way of example only, with reference to the accompanying drawings in which like reference numerals are used for like features, and in which:

Figure 1 is a schematic plan view of an ego vehicle travelling in a lane of a roadway, with a target vehicle travelling ahead of the ego vehicle;

Figure 2 is a schematic side view of an ego vehicle showing an actual position and an estimated position of a target vehicle ahead of the ego vehicle;

Figures 3a, 3b and 3c are schematic representations of an image of a vehicle environment ahead of an ego vehicle, illustrating the position of bounding boxes calculated using different parameters;

Figures 4 is a schematic representation illustrating the position of an optimized bounding box around a target vehicle;

Figure 5 is a schematic representation of an image of a vehicle environment ahead of an ego vehicle, illustrating the position of optimized bounding boxes;

Figure 6 is a schematic diagram of a system for estimating the position of a target vehicle in a vehicle environment.

Figure 7 shows steps in a method for estimating the position of a target vehicle in a vehicle environment by determining the position of a bounding box;

Figures 8a to 8e are schematic representations of vehicle environments illustrating the identification of pre-determined features of a target vehicle during determination of the position of a bounding box; and

Figure 9 shows steps in a method for determining the position of a lower edge of a bounding box using pre-determined features of a target vehicle.

DETAILED DESCRIPTION

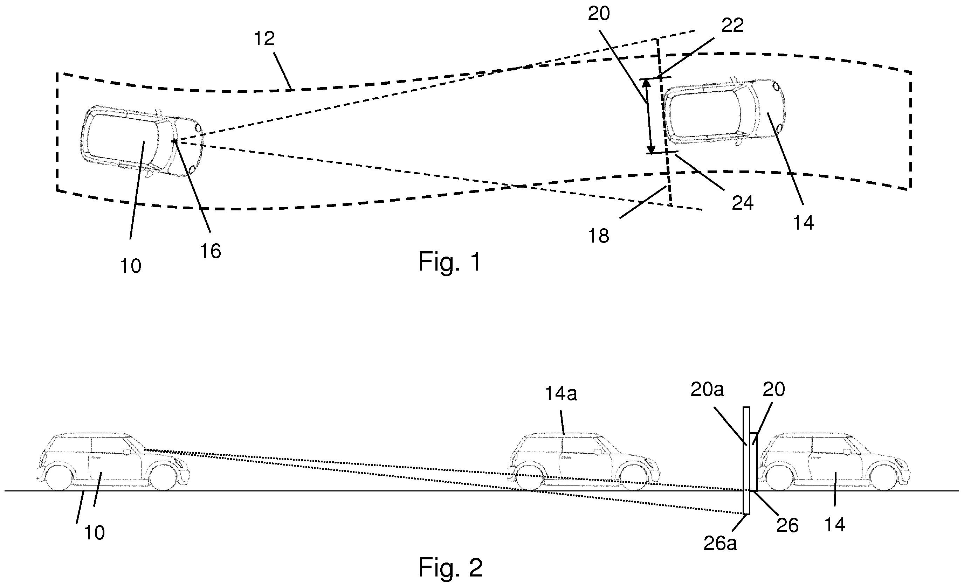

Figure 1 shows an ego vehicle 10 travelling in a vehicle environment. The ego vehicle 10 is travelling in a lane 12 of a roadway behind another vehicle 14, hereafter referred to as a target vehicle. The ego vehicle 10 is equipped with a forward-facing camera 16, which captures a two-dimensional image of the scene ahead of the ego vehicle 10 that includes the rear of the target vehicle 14. The imaged area is indicated by plane 18 in Figure 1.

The ego vehicle 10 is equipped with an advanced driver assistance system (ADAS) including a computer vision system for determining or estimating the position of the target vehicle within the vehicle environment. The computer vision system is based on a machine learning model, such as an artificial neural network.

Estimation of the position of a target vehicle involves first using the neural network to determine the position of the target vehicle 14 within the two-dimensional image 18 captured by the camera 16. The determined position of the target vehicle 14 is output from the neural network as a bounding area that identifies the position of the extremities of the vehicle 14 in the image 18. In this example, the bounding area is a rectangular bounding box 20 with edges that correspond to the lowermost and uppermost edges and left and right sides of the target vehicle 14. The left and right sides 22, 24 of the bounding box 20 are indicated in Figure 1.

After determining the bounding box 20, the bounding box information can be used to derive information about the position of target vehicle 14 with respect to the three-dimensional vehicle environment. Of particular interest in many ADAS applications is the distance of the target vehicle 14 ahead of the ego vehicle 10. It can be assumed that the vehicle meets the plane of the roadway at the lower edge of the bounding box 20. Accordingly, the spacing between the ego vehicle 10 and the target vehicle 14 can be determined primarily from the lower edge of the bounding box 20.

Figure 2 illustrates a vehicle environment scene from the side, with the actual position of the target vehicle indicated at 14. Two possible bounding boxes 20, 20a are associated with the target vehicle 14. If the position of the lower edge 26 of the bounding box has been accurately determined, as is the case for the smaller bounding box 20 in Figure 2, the calculated position of the target vehicle 14 will also be accurate.

If, however, the bounding box is less accurate (i.e. the edges of the bounding box do not closely correspond to the extremities of the vehicle in the image), particularly with respect to the lower edge of the bounding box, the calculated position of the target vehicle may be inaccurate. This is the case for the larger bounding box 20a of Figure 2. In this case, the lower edge 26a of the bounding box 20a is too low, and the calculated position of the target vehicle 14, indicated by reference numeral 14a, is closer to the ego vehicle 10 than the actual position of the target vehicle 14. Such errors can lead to sub-optimal performance of ADAS applications such as adaptive cruise control (ACC), where accurate determination of the distance between the ego vehicle 10 and a target vehicle 14 is necessary for correct behaviour.

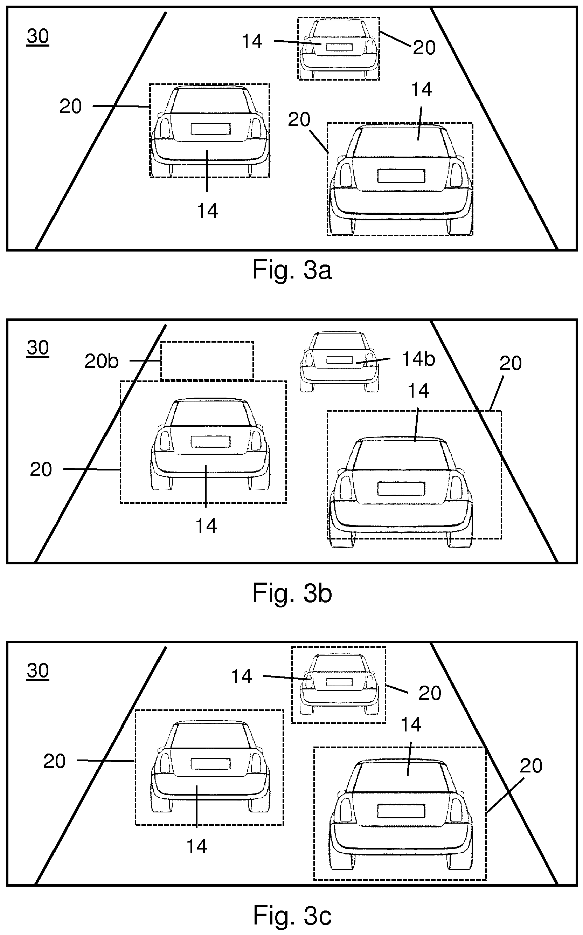

Figures 3a to 3c are illustrations representing an image 30 obtained from the forward-facing camera 16 of the ego vehicle 10. Three target vehicles 14 are present in the image 30. In each case, illustrative bounding boxes 20 are shown that represent the outputs of conventional computer vision systems.

Figure 3a illustrates the case where the bounding boxes are calculated using a highly discriminative network. Such networks may for example be very deep (i.e. include many layers between the input and output layers) and may be trained with loss functions that demand very high accuracy. The result is a set of bounding boxes 20 that correspond closely to the extremities of the target vehicles 14 (sometimes referred to as "tight" bounding boxes). While this is desirable in terms of accuracy, the high resource demands of such networks mean that it is not generally possible to output results quickly enough to achieve substantially real-time processing using the available resources in ADAS-equipped vehicles.

Figure 3b illustrates the expected results from a substantially faster network with much lower resource demand than that used in Figure 3a. In this case, there are considerable discrepancies between the bounding boxes 20 and the actual positions of the target vehicles 14 (sometimes referred to as "loose" bounding boxes). Furthermore, the results display false negatives and false positives: the target vehicle 14b furthest from the ego vehicle 10 has not been identified, and an erroneous bounding box 20b that is not associated with a target vehicle is present. These issues can significantly impact the performance of ADAS functions such as ACC.

Figure 3c illustrates a set of bounding boxes 20 that would conventionally be considered acceptable for use in ADAS systems. In this case, false negatives and false positives are generally avoided and processing is suitably rapid, but there are still significant differences between the positions of the bounding boxes 20 and the extremities of the target vehicles 14 compared with the "tight" bounding boxes of Figure 3a. As explained above with reference to Figure 2, these differences can lead to sub-optimal performance of ADAS functions.

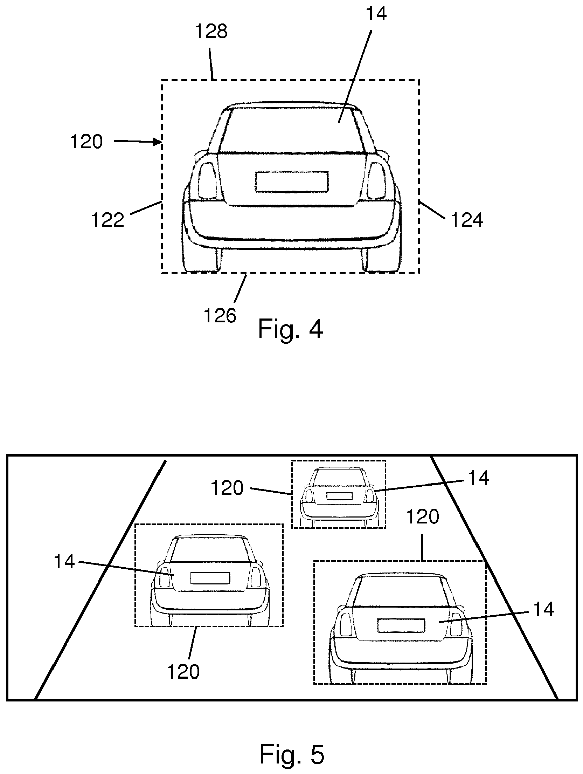

Referring to Figures 4 and 5, embodiments of systems and methods of the present disclosure are designed to generate optimized bounding boxes in which the position of the lower edge 126 of the bounding box 120 is determined with a high degree of accuracy, while a greater tolerance is allowed for the remaining edges of the bounding box 120 (i.e. the left and right side edges 122, 124 and the upper edge 128).

Bounding boxes 120 that are optimized in this way may allow more accurate computation of the distance between the ego vehicle 10 and a target vehicle 14, since the accuracy of the lower edge 126 of the bounding box 120 is determinative in that regard. Accordingly, when used in an ADAS function, such as ACC, improved performance can be achieved.

The optimized bounding boxes 120 of the type shown in Figures 4 and 5 are asymmetric, in the sense that the lower edge 126 of the bounding box 120 conforms more closely to the position of the lowermost edge of the target vehicle 14 than the remaining edges 122, 124, 128 of the bounding box 120. This may for example be achieved by applying suitably weighted loss functions during training of the network for the respective bounding box edges.

In that connection, an example of a conventional symmetrical loss function $L_S$ for object detection is given by:

$$L_S = \sqrt{(x_i - x_i^{\sim})^2 + (y_i - y_i^{\sim})^2 + (w_i - w_i^{\sim})^2 + (h_i - h_i^{\sim})^2}$$

where, for each iteration $i$, $x_i$ and $y_i$, are the normalized x and y coordinates of the predicted bounding box in the image, $w_i$ and $h_i$ are the normalized width and height of the predicted bounding box, and $x_i^{\sim}$, $y_i^{\sim}$, $w_i^{\sim}$ and $h_i^{\sim}$ are the same variables for the ground truth bounding box. This conventional loss function typically results in symmetrical bounding box with equal weights given to each edge of the box.

In contrast, embodiments of the present disclosure may use the following asymmetric loss function, $L_A$:

$$L_A = \lambda_L \sqrt{(x_{TLi} - x_{TLi}^{\sim})^2 + (y_{TLi} - y_{TLi}^{\sim})^2 + (x_{BLi} - x_{BLi}^{\sim})^2 + (y_{BLi} - y_{BLi}^{\sim})^2}$$

$$+ \lambda_R \sqrt{(x_{TRi} - x_{TRi}^{\sim})^2 + (y_{TRi} - y_{TRi}^{\sim})^2 + (x_{BRi} - x_{BRi}^{\sim})^2 + (y_{BRi} - y_{BRi}^{\sim})^2}$$

$$+ \lambda_B \sqrt{(x_{BLi} - x_{BLi}^{\sim})^2 + (y_{BLi} - y_{BLi}^{\sim})^2 + (x_{BLi} - x_{BLi}^{\sim})^2 + (y_{BLi} - y_{BLi}^{\sim})^2}$$

in which $\lambda_L$, $\lambda_R$ and $\lambda_B$ are weighting factors for the left, right and bottom (lower) edges of the bounding box respectively, $x_{TLi}$, $x_{BLi}$, $x_{TRi}$ and $x_{BRi}$ are the normalized x coordinates of the top left, bottom left, top right and bottom right corners of the predicted bounding box in the image, respectively, $y_{TLi}$, $y_{BLi}$, $y_{TRi}$ and $y_{BRi}$ are the normalized y coordinates of the same corners of the predicted bounding box, and the superscript "~" denotes the same variables for the ground truth bounding box.

Setting $\lambda_L = \lambda_R = 0$ and $\lambda_B = 1$ results in a loss function $L_A$ that is exclusively directed to establishing accurately the lower edge 126 of the bounding box 120. Setting $\lambda_L$ and/or $\lambda_R$ to a value above zero results in a loss function $L_A$ that also establishes the left and/or right edges 122, 124 of the bounding box 120. Preferably, the values of $\lambda_L$ and/or $\lambda_R$ are less than the value of $\lambda_B$, so that computational effort is proportionately higher for the lower edge 126 of the bounding box 120. In one suitable example, the weighting factors in the loss function $L_A$ are set as $\lambda_B = 1$ and $\lambda_L = \lambda_R = 0.5$.

In each of the above examples, the top edge 128 of the bounding box 120 is not taken into account in the loss function $L_A$, although it will be appreciated that a suitable term could be included so that the top edge 128 is also taken into account.

A method and system for generating an optimized bounding box 120 of the type shown in Figures 4 and 5 will now be described. The method uses the identification of pre-defined features of the target vehicle to help identify the position of the lower edge of the bounding box 120, which substantially reduces the computational effort required to generate such optimized bounding boxes 120 compared to that which is required to generate conventional "tight" bounding boxes 20 as illustrated in Figure 3a.

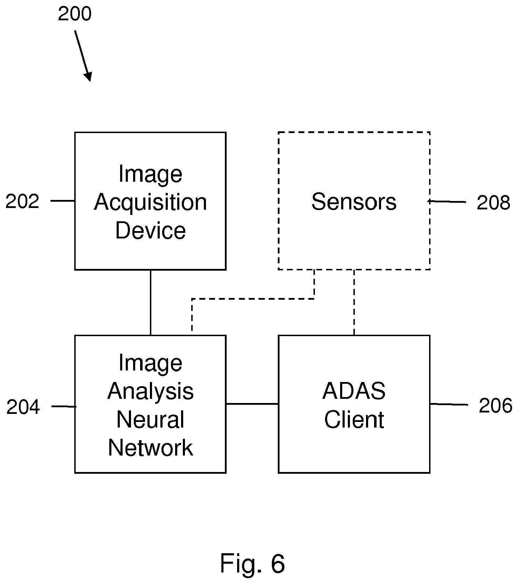

Referring to Figure 6, the system 200 is a computer vision system comprising an image acquisition device 202 connected to an image analysis artificial neural network 204. In this example, the system 200 is provided in an ADAS-equipped ego vehicle and the image acquisition device 202 is a forward-facing camera arranged to capture an image of the vehicle environment ahead of the ego vehicle.

The neural network 204 is configured to analyse the image, as will be described in more detail below, and to output the results to an ADAS client 206. The ADAS client 206 provides ADAS functionality to the vehicle, and may comprise, for example, an ACC module configured to provide adaptive cruise control functionality. Although exemplified as a separate module 206 in Figure 6, the ADAS client 206 may instead be integrated with the neural network 204.

Optionally, the system 200 may comprise one or more further sensors 208 that provide additional sensory inputs to the neural network 204 and/or to the ADAS client 206 for validation or other suitable purposes. The further sensors 208 may comprise radar, Lidar, sonar and/or GPS sensors and other suitable sensors.

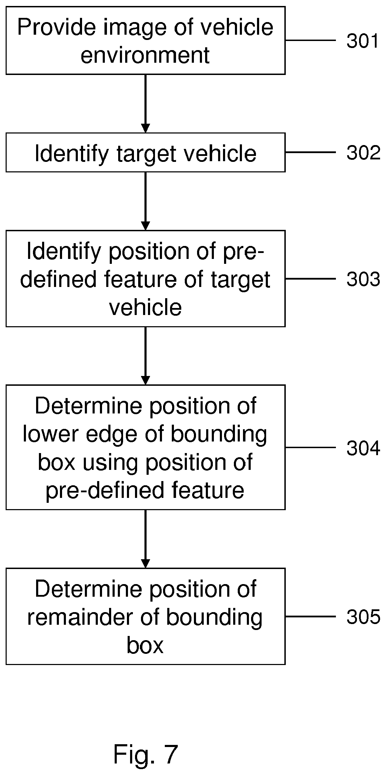

Referring additionally to Figure 7, the system 200 is configured to execute a method of estimating the position of a target vehicle in a vehicle environment. In a first step 301 of the method, an image of the vehicle environment is provided to the neural network 204.

The neural network 204 is configured to perform a series of image analysis steps. In step 302, a target vehicle is identified in the image. Identification of the target vehicle may, for example, comprise generating a preliminary, "loose" bounding box that indicates the approximate location of the vehicle with minimal computational effort. In step 303, the position of one or more pre-defined features of the target vehicle are identified. Examples of pre-defined features include vehicle registration plates (number plates), light clusters, tyres and so on, which are artifacts that can be expected to be present and visible on a substantial majority of target vehicles.

In step 304, the position of the lower edge 126 of the bounding box 120 is determined. In this step 304, the position of the or each of the pre-defined features, as determined in step 303, is used as an input or constraint to the neural network 204 to assist in accurate discrimination of the lowermost edge of the target vehicle.

In step 305, the remainder of the bounding box 120, comprising the side edges 122, 124 and the top edge 128 of the bounding box 120, is determined.

The bounding box 120 determined in this way can then be output to the ADAS client 206, for example for further analysis to determine the spacing between the ego vehicle and the target vehicle. When available, information from the further sensors 208 may be used to validate the determined position of the target vehicle.

In the system 200 of Figure 6, the neural network 204 is trained with the pre-defined features to allow rapid subsequent identification of the pre-defined features in step 303 of the method of Figure 7.

Identification of pre-defined features of the vehicle, as described above, also provides a validation method for avoiding false positives in the identification of target vehicles. If an object is identified as a target vehicle in step 302 of the method of Figure 7 but no pre-defined features of that vehicle can be identified in step 303, further verification of the object identification process may be instigated.

Furthermore, the additional detection of pre-defined features of the vehicle can provide a validation block for meeting safety requirements in the identification of neighbouring vehicles in the vehicle environment.

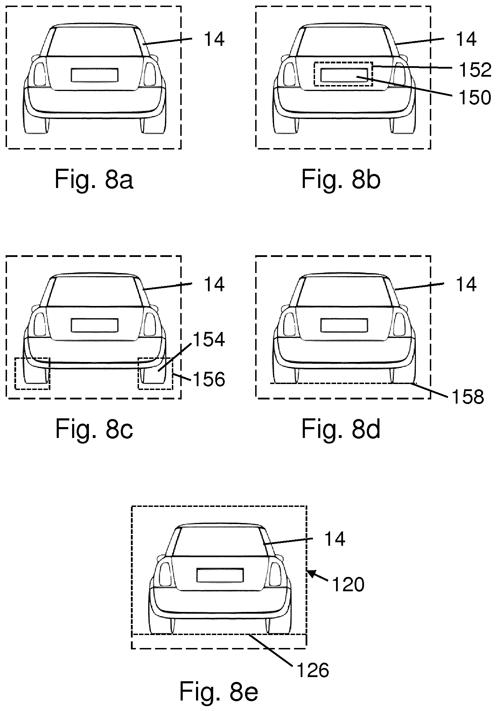

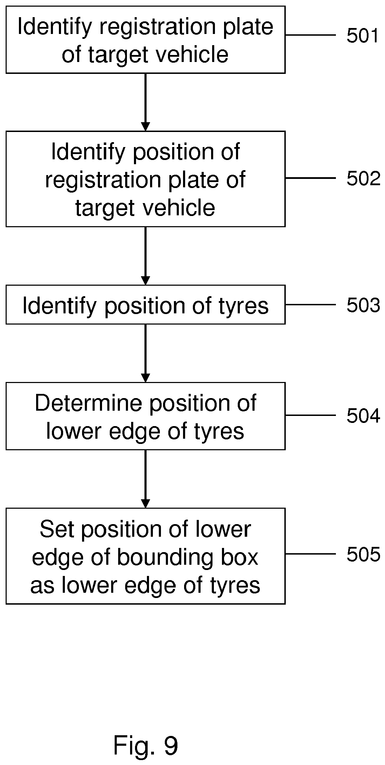

An example of the identification of pre-defined features of a target vehicle and subsequent determination of the lower edge of the bounding box, as may take place in steps 303 and 304 of the method of Figure 7, will now be described with reference to Figures 8 and 9. In this case, the method involves the identification of a registration plate of the vehicle and tyres of the vehicle as pre-defined features. Within a given geographical region, registration plates are customarily of a single permissible size, colour and type, or are selected from a relatively small number of permissible sizes, colours and types. Accordingly, the neural network can be readily trained to identify the position of a registration plate in an image of a target vehicle with a high degree of accuracy.

Figure 8a shows schematically a target vehicle 14 that has been identified in an image. In step 401 of the example method of Figure 9, the registration plate 150 of the vehicle 14 is identified and, in step 402, the position of the registration plate 150 is determined. Figure 8b shows a bounding box 152 that indicates the detected position of the registration plate 150 on the rear of the vehicle 14.

In step 403, the positions of the tyres 154 of the vehicle 14 are identified, and corresponding bounding boxes 156 are determined as shown in Figure 8c. The previously-determined position of the registration plate 150 is used to assist in localization of the positions of the tyres 154, since it can be expected that the tyres 154 will be positioned on either side of, and below, the registration plate 150, and this will be reflected in the training of the neural network.

In step 404, the position of the lowermost visible edge 158 of each tyre 154 is determined as shown in Figure 8d. This position identifies the point at which the vehicle 14 meets the plane of the roadway.

In step 505, the position of the lower edge 126 of the bounding box 120 is set as the position of the lowermost visible edge 158 of the tyres 154. As described above, this leads to an optimized bounding box 120 having an accurately-determined lower edge 126.

In other embodiments, different pre-defined features of the target vehicle can be used to assist in the determination of the lower edge of the bounding box. For instance, the position of light clusters can usually be readily identified. Detection of vehicle lights may be easier than detection of tyres and other vehicle features at night. Also, in regions where the use of daytime running lights is mandated, detection of vehicle lights can be particularly reliable.

Therefore the method may involve identifying the position of the light clusters at the rear of the target vehicle. The tyres of the vehicle are typically located below and substantially in line with each light cluster, so that identifying the position of the light clusters assists in localization of the tyres. Further examples of pre-defined features that could be used in the systems and methods described above include door mirrors, windscreens, reflectors, and so on.

The above examples have been described in the context of an ego vehicle with a forward-facing camera, with the systems and methods providing information relating to target vehicles in the vehicle environment ahead of the ego vehicle. It is also possible to apply the systems and methods in a rear-facing camera arrangement, in which the output relates to target vehicles in the vehicle environment behind the ego vehicle, or in a side-facing camera arrangement.

It will also be appreciated that, in addition to use in ego vehicles, the systems and methods described above could be employed in fixed installations and other non-vehicle situations, for example for traffic monitoring or control.

In the examples described above, the resulting bounding boxes are optimized in respect of the lower edges, with a "looser" fit being acceptable for the remaining edges of the bounding boxes. However, if desired, the methods described above can equally be applied to achieve a "tighter" fit for the side edges of a bounding box, either instead of or in addition to the lower edge (with a corresponding increase in resource demand in some cases). Detection of the vehicle tyres and/or light clusters can be useful in determining the side edges of the bounding box. Optimisation of side edge detection can be useful for example in ADAS functions such as lane-change assistance and side collision avoidance, and can provide useful information for computation of target vehicle speed and distance.

The upper edge of the bounding box is rarely useful in ADAS functions. Accordingly, in embodiments, the upper edge of the bounding box may be undetermined or set at a nominal spacing from the lower edge to minimise the use of computational resources.

The systems and methods of this disclosure can be embodied at least in part by deep artificial neural networks. Examples of suitable known networks for ADAS-equipped vehicle applications include ShuffleNet and FD-MobileNet. It is however conceivable that other machine learning models could be employed.

Further modifications and variations can also be contemplated without departing from the scope of the systems and methods of the present disclosure as defined in the appended claims.

## Claims

1. A method for estimating the position of a target vehicle (14) in a vehicle environment using a machine learning model, the method comprising:

    providing to the machine learning model an image of the vehicle environment;
    identifying, in the image, a target vehicle (14); and
    generating a bounding area (120) around the target vehicle (14) comprising a lower edge portion (126) associated with a lowermost edge of the target vehicle (14) and first and second side edge portions (122, 124) associated with first and second side edges of the target vehicle (14), the bounding area (120) thereby providing an estimate of the position of the target vehicle (14) in the image;
    wherein generating the bounding area (120) comprises identifying the position of one or more pre-defined features (150, 154) of the target vehicle (14) in the image, the machine learning model having been trained with said one or more pre-defined features (150, 154); and using the identified position of the one or more pre-defined features (150, 154) to determine the position of the lower edge portion (126) and/or the first and second side edge portions (122, 124) of the bounding area (120).

2. A method according to Claim 1, wherein determining the position of the lower edge portion (126) and/or the first and second side edge portions (122, 124) of the bounding area (120) comprises:

    (a) using the identified position of one or more first pre-defined features (150) to determine the position of one or more further pre-defined features (154) of the target vehicle (14) in the image, the machine learning model having also been trained with said one or more further pre-defined features (154); and
    (b) using the identified position of the or each further pre-defined feature (154) to determine the position of the lower edge portion (126) and/or the first and second side edge portions (122, 124) of the bounding area (120).

3. A method according to Claim 1 or Claim 2, wherein the one or more pre-defined features comprises a vehicle registration plate (150) of the target vehicle (14).

4. A method according to any preceding claim, wherein the one or more pre-defined features comprises a light cluster of the target vehicle (14).

5. A method according to any preceding claim, wherein the one or more pre-defined features comprises a tyre (154) of the target vehicle (14).

6. A method according to any preceding claim, wherein the identified position of a pre-defined feature of the one or more pre-defined features (150, 154) is used to determine the position only of the lower edge portion (126) of the bounding area (120).

7. A method according to any preceding claim, wherein the image of the vehicle environment is obtained from a forward-facing camera (16) or rear-facing camera of an ego vehicle (10).

8. A method according to Claim 7, comprising determining a spacing between the ego vehicle (10) and the target vehicle (14) based on the position of the lower edge portion (126) of the generated bounding area (120).

9. A method according to Claim 8, comprising obtaining a distance measurement between the ego vehicle (10) and the target vehicle (14) from a vehicle sensor (208), and comparing the distance measurement with the determined spacing to validate the position of the target vehicle (14) with respect to the ego vehicle (10).

10. A method according to any preceding claim, comprising outputting the bounding area (120) to an advanced driving assistance system (ADAS) client (206).

11. A method according to any preceding claim, wherein the machine learning model comprises an artificial neural network (204).

12. A method according to any preceding claim, wherein the machine learning model is trained using a loss function in which a lower edge weighting factor $\lambda_B$ is assigned to the lower edge portion of the bounding area and left and right edge weighting factors $\lambda_L$, $\lambda_R$ are assigned to the left and right edge portions of the bounding area, and wherein the lower edge weighting factor $\lambda_B$ is greater than the left and right edge weighting factors $\lambda_L$, $\lambda_R$.

13. A system for estimating the position of a target vehicle in a vehicle environment, comprising a machine learning model (204) trained with one or more pre-defined features of the target vehicle, the machine learning model being configured to:

   receive, from an image acquisition device (202), an image of the vehicle environment;
   identify, in the image, a target vehicle (14); and
   generate a bounding area (120) around the target vehicle (14) comprising a lower edge portion (126) associated with a lowermost edge of the target vehicle (14) and first and second side edge portions (122, 124) associated with first and second side edges of the target vehicle (14), the bounding area (120) thereby providing an estimate of the position of the target vehicle (14) in the image;
   the machine learning model (204) being configured to generate the bounding area (120) by identifying the position of a pre-defined feature of the one or more pre-defined features (150, 154) of the target vehicle (14) in the image and using the identified position of the pre-defined feature of the one or more pre-defined features (150, 154) to determine the position of the lower edge portion (126) and/or the first and second side edge portions (122, 124) of the bounding area (120).

14. An advanced driver assistance system (ADAS) for a vehicle, comprising a system according to Claim 13 and an ADAS client (206), the machine learning model (204) being configured to output to the ADAS client (206) the bounding area (120) identifying the position of the target vehicle (14) in the image.

15. A vehicle equipped with an advanced driver assistance system (ADAS) according to Claim 14.

Fig. 1

Fig. 2

30

14      20

20

20    14

14

14

Fig. 3a

30

20b

14b

20

20

14

14

Fig. 3b

30

14

20

20

14

14

20

14

Fig. 3c

Fig. 4

Fig. 5

200

202 —— Image
Acquisition
Device

Sensors —— 208

204 —— Image
Analysis
Neural
Network

ADAS
Client —— 206

Fig. 6

```
┌─────────────────────────┐
│  Provide image of vehicle │──── 301
│       environment         │
└─────────────────────────┘
            │
            ▼
┌─────────────────────────┐
│    Identify target vehicle │──── 302
└─────────────────────────┘
            │
            ▼
┌─────────────────────────┐
│   Identify position of pre- │
│  defined feature of target │──── 303
│          vehicle           │
└─────────────────────────┘
            │
            ▼
┌─────────────────────────┐
│   Determine position of   │
│   lower edge of bounding  │
│    box using position of  │──── 304
│     pre-defined feature   │
└─────────────────────────┘
            │
            ▼
┌─────────────────────────┐
│   Determine position of   │
│   remainder of bounding   │──── 305
│            box            │
└─────────────────────────┘
```

Fig. 7

Fig. 8a

Fig. 8b

Fig. 8c

Fig. 8d

Fig. 8e

| Identify registration plate of target vehicle | — 501 |

| Identify position of registration plate of target vehicle | — 502 |

| Identify position of tyres | — 503 |

| Determine position of lower edge of tyres | — 504 |

| Set position of lower edge of bounding box as lower edge of tyres | — 505 |

Fig. 9

Europäisches
Patentamt

European
Patent Office

Office européen
des brevets

**EUROPEAN SEARCH REPORT**

Application Number

EP 19 16 5623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/184963 A2 (BOSCH GMBH ROBERT [DE]) 11 October 2018 (2018-10-11) * abstract * * paragraphs: [0003], [0031], [0033], [0019], [0021] * * figures 1, 2, 7 * | 1-11, 13-15 | INV. G06K9/00 G06K9/46 G06K9/32 |
| X | US 2019/012548 A1 (LEVI DAN [IL] ET AL) 10 January 2019 (2019-01-10) * abstract * * paragraphs: [0032]-[0036], [0050], [0058] * * figure 6 * | 1,13 | |
| X | Joseph Redmon ET AL: "You Only Look Once: Unified, Real-Time Object Detection", , 9 May 2016 (2016-05-09), pages 1-10, XP055556774, DOI: 10.1109/CVPR.2016.91 Retrieved from the Internet: URL:https://arxiv.org/pdf/1506.02640.pdf [retrieved on 2019-02-14] * abstract * * Section 2.1; Section 2.2 * * figure 6 * | 1,12,13 | |
| | | | TECHNICAL FIELDS SEARCHED (IPC) |
| | | | G06K |

The present search report has been drawn up for all claims

| Place of search | Date of completion of the search | Examiner |
|---|---|---|
| The Hague | 16 September 2019 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 5623

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2019

| Patent document cited in search report | Publication date | Patent family member(s) | Publication date |
|---|---|---|---|
| WO 2018184963 A2 | 11-10-2018 | NONE | |
| US 2019012548 A1 | 10-01-2019 | CN 109214264 A | 15-01-2019 |
| | | DE 102018116111 A1 | 10-01-2019 |
| | | US 2019012548 A1 | 10-01-2019 |

EPO FORM P0459

For more details about this annex : see Official Journal of the European Patent Office, No. 12/82